# EUROPÄISCHE PATENTANMELDUNG

(11) **EP 1 241 046 A1**
(43) Veröffentlichungstag der Anmeldung: **18.09.2002**
(21) Anmeldenummer: 02004908.6
(22) Anmeldetag: 05.03.2002
(51) Int. Cl.: B60N 2/36

(54) **Fahrzeugsitz mit einer Rückenlehne**

(30) Priorität: 14.03.2001 DE 10112134
(71) Anmelder: Bayerische Motoren Werke Aktiengesellschaft, 80809 München (DE)
(72) Erfinder: Brandt, Claus, 81547 München (DE)

(57) **Zusammenfassung**

Es sind zweigeteilte Rückenlehnen für eine Rücksitzbank eines Fahrzeugs bekannt, die nach vorne umgeklappt werden können und leicht ausbaubar sind. Die zum Umklappen erforderlichen Scharniere müssen nachteiligerweise hohe Kräfte aushalten können. Aufgabe der Erfindung ist es, die bekannte umklappbare Rückenlehne weiterzubilden.

Dazu weist eine Rückenlehne (**1**) eines Fahrzeugsitzes einen Tragrahmen (**2**) mit zwei frei abragenden Befestigungsabschnitten (**5, 6**) auf. Sie kann aus einer Gebrauchsstellung in eine Nichtgebrauchsstellung um mindestens ein Scharnier (**7**, **8**) nach vorne umgeklappt werden. Die Befestigungsabschnitte (**5, 6**) sind durch je ein Scharnier (**7, 8**) jeweils in einen freien (**10**) und einen tragrahmenseitigen Abschnitt (**9**) unterteilt. Die Befestigungsabschnitte (**5, 6**) sind in karosseriefeste formschlüssige Aufnahmen (**11, 12**) des Fahrzeugs eingesteckt, wobei in der Gebrauchsstellung die Befestigungsabschnitte (**5, 6**) mit zumindest den freien Abschnitten (**10**) inklusive den Scharnieren (**7, 8**) eingesteckt sind, während in der Nichtgebrauchsstellung die Befestigungsabschnitte (**5, 6**) nur mit ihren unteren Abschnitten (**9**) eingesteckt sind.

## Beschreibung

Die Erfindung betrifft einen Fahrzeugsitz mit einer Rückenlehne nach dem Oberbegriff des Patentanspruchs 1.

Aus der FR 2 775 228 A1 ist eine zweigeteilte Rückenlehne für eine Rücksitzbank eines Fahrzeugs bekannt, die nach vorne umgeklappt werden kann und leicht ausbaubar ist. Die zum Umklappen erforderlichen Scharniere müssen nachteiligerweise hohe Kräfte, wie sie beispielsweise durch den Aufprall von Ladegut bei einem Unfall von hinten auf die Rückenlehne entstehen, aushalten können. Dies erhöht das Gewicht und die Kosten der Scharniere und Scharnieranbindungen.

Aufgabe der Erfindung ist es, die bekannte umklappbare Rückenlehne weiterzubilden.

Diese Aufgabe wird durch die Merkmale des Patentanspruchs 1 gelöst.

Eine Rückenlehne eines Fahrzeugsitzes weist einen Tragrahmen mit zwei frei abragenden Befestigungsabschnitten auf. Sie kann aus einer Gebrauchsstellung in eine Nichtgebrauchsstellung um mindestens ein Scharnier nach vorne umgeklappt werden. Kerngedanke der Erfindung ist es, dass je ein Scharnier die Befestigungsabschnitte jeweils in einen freien und einen tragrahmenseitigen Abschnitt unterteilt. Die Befestigungsabschnitte sind in karosseriefeste formschlüssige Aufnahmen des Fahrzeugs eingesteckt, wobei in der Gebrauchsstellung die Befestigungsabschnitte mit zumindest den freien Abschnitten inklusive den Scharnieren eingesteckt sind, während in der Nichtgebrauchsstellung die Befestigungsabschnitte nur mit ihren freien Abschnitten eingesteckt sind. Die Überführung der Rückenlehne aus der Gebrauchsstellung in die Nichtgebrauchsstellung erfolgt durch ein teilweises Herausziehen oder -drücken der Rückenlehne mit dem Tragrahmen und den damit verbundenen Befestigungsabschnitten aus der Aufnahme.

Dadurch werden die Kräfte auf die sich in der Gebrauchsstellung befindenden Rückenlehne über den Tragrahmen und die tragrahmenseitigen Abschnitte direkt in die karosseriefeste Aufnahme eingeleitet. Der Kraftfluss geht nicht durch die Scharniere, wie das bei bekannten umklappbaren Rückenlehnen der Fall ist. Die Scharniere und die Anbindung der Scharniere müssen nur geringere Kräfte übertragen können. Dadurch ist die Rückenlehne leichter und die Herstellkosten sind geringer. Diese Vorteile sind besonders gravierend bei sogenannten freistehenden Rückenlehnen, die also nur im unteren Bereich mit einer Fahrzeugkarosserie verbunden sind.

Vorteilhafterweise können die Befestigungsabschnitte vollständig aus den Aufnahmen herausgenommen werden, so dass die Rückenlehne aus dem Fahrzeug entnommen werden kann. Dies erhöht den Gebrauchsnutzen des Fahrzeugs, da ganz nach Bedarf das Fahrzeug schnell unterschiedlichen Bedürfnissen an Ladeflächen und Sitzplätzen angepasst werden kann.

In einer weiteren günstigen Ausgestaltung ist eine Verriegelungseinrichtung an den Aufnahmen angeordnet, die die in die Aufnahmen eingesteckten Befestigungsabschnitte arretieren kann. Dadurch kann die Rückenlehne nicht unbeabsichtigt in der Nichtgebrauchsstellung aus der Aufnahme herausgerüttelt werden, so dass die Rückenlehne lose auf einem Sitzkissen des Fahrzeugsitzes liegen würde. Analog dazu kann die Rückenlehne auch nicht unbeabsichtigt aus der Gebrauchsstellung in die Nichtgebrauchsstellung nach vorne umklappen.

Eine besonders einfache Anordnung einer solchen Vorrichtung weist einen Bedienhebel zur Betätigung auf. Vorteilhafterweise ragt der Bedienhebel in einer geöffneten Stellung, in der die Befestigungsabschnitte durch die Verriegelungseinrichtung in ihrer Einstecktiefe nicht arretiert sind, oder aufgrund der Einstecktiefe die Rückenlehne nach vorne umklappbar ist, in den Sitzbereich des Fahrzeugsitzes hinein. Dadurch wird gewährleistet, dass die Rückenlehne immer in ihrer Gebrauchsstellung verriegelt wird, bevor ein Passagier auf dem Fahrzeugsitz Platz nehmen möchte.

Idealerweise ist am Tragrahmen ein Schließblech befestigt, das Schutz vor einem Aufprall von Ladegut von hinten auf die Rückenlehne bietet. Dies ist eine besonders einfache Möglichkeit, den erforderlichen Schutz vor Ladung gleich in die Rückenlehne des Fahrzeugsitzes mit zu integrieren.

Weitere vorteilhafte Ausgestaltungen sind Gegenstand von Unteransprüchen.

In den Ansprüchen wird Schutz begehrt für einen Fahrzeugsitz mit einer Rückenlehne, die einen Tragrahmen mit zwei frei abragenden Befestigungsabschnitten aufweist. In gleicher Weise sind jedoch auch Fahrzeugsitze mit einem oder mehr als zwei Befestigungsabschnitten vom Schutz umfasst.

In der Zeichnung ist ein mögliches Ausführungsbeispiel der Erfindung dargestellt, das im folgenden näher beschrieben wird. Es zeigen in schematischer Darstellungsweise:
- **Fig.** 1: eine räumliche Ansicht einer erfindungsgemäßen umklappbaren Rückenlehne im ausgebauten Zustand,
- **Fig.** 2: eine räumliche Ansicht der Rückenlehne von **Fig.** 1 in der Gebrauchsstellung und
- **Fig.** 3: eine räumliche Ansicht der Rückenlehne von **Fig.** 1 in der nach vorne umgeklappten Nichtgebrauchsstellung.

Die Figuren zeigen eine Rückenlehne 1 eines hier nicht weiter dargestellten Fahrzeugsitzes. Die Rückenlehne 1 besteht aus einem Tragrahmen 2, der oben eine Kopfstütze 3 aufnimmt und auf der Rückseite mit einem Schließblech 4 flächig geschlossen ist. Das Schließblech 4 stellt den erforderlichen Schutz vor möglicherweise bei einem Unfall von hinten auf die Rückenlehne 1 aufprallendem Ladegut dar. Der Tragrahmen 2 endet links und rechts unten in zwei frei nach unten ragenden Befestigungsabschnitten 5 und 6 aus rechteckigen Hohlprofilen. Die Befestigungsabschnitte 5 und 6 des Tragrahmens 2 sind durch je ein Scharnier 7 und 8 in einen tragrahmenseitigen Abschnitt 9 und einen freien Abschnitt 10 unterteilt.

Karosserieseitig sind zwei fest mit der Fahrzeugkarosserie verbundene, formschlüssige Aufnahmen 11 und 12 für die beiden Befestigungsabschnitte 5 und 6 vorgesehen. Die Aufnahmen 11 und 12 bestehen aus einem rechteckigen Hohlprofil, in das die beiden Hohlprofile der Befestigungsabschnitte 5 und 6 mit geringem Spiel hineinpassen. Die beiden Aufnahmen 11 und 12 sind mit einem hohlen Querträger 13 verbunden. In der Mitte des Querträgers 13 ist ein Bedienhebel 14 angeordnet. Durch ein Schwenken des Bedienhebels 14 werden links und rechts des Bedienhebels 14 zwei im Querträger 13 geführte Stangen 15 und 16 axial verlagert.

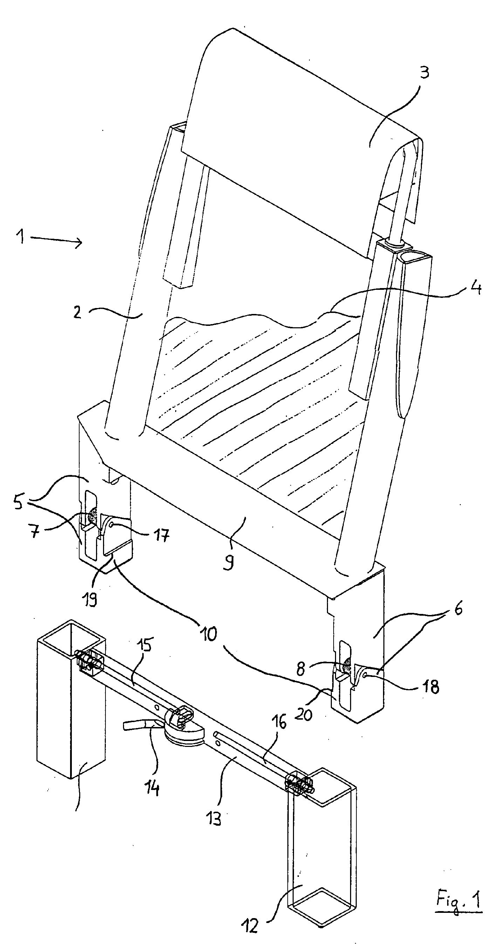

In der in **Fig.** 1 gezeigten einen Endstellung des Bedienhebels 14 ragen die beiden Stangen 15 und 16 aus den seitlichen Enden des Querträgers 13 nicht in die formschlüssigen Aufnahmen 11 und 12 hinein. In dieser Stellung des Bedienhebels 14 kann die Rückenlehne 1 in das Fahrzeug ein- oder ausgebaut werden. Dazu muss die Rückenlehne 1 mit ihren beiden Befestigungsabschnitten 5 und 6 nur in die formschlüssigen Aufnahmen 11 und 12 eingesteckt oder herausgezogen werden.

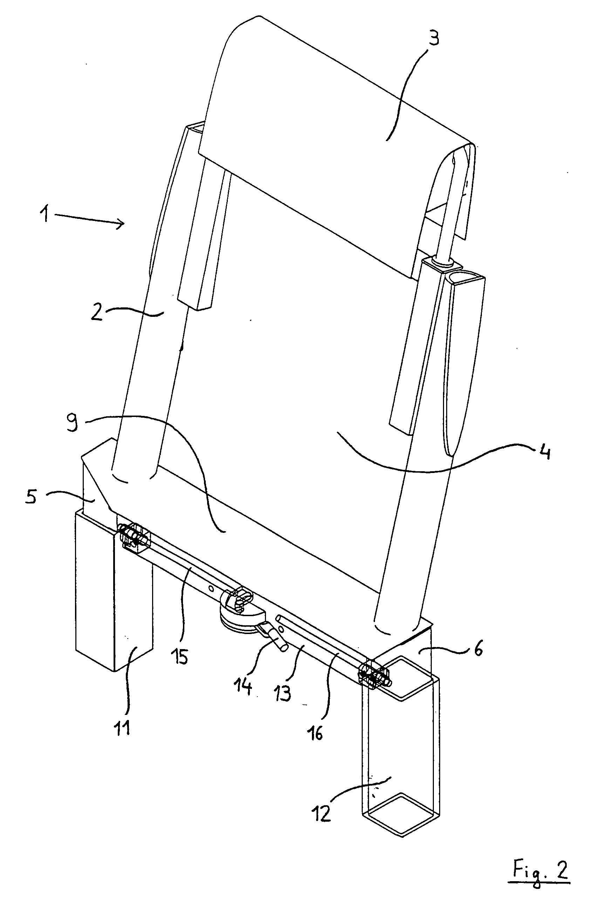

In der in **Fig.** 2 gezeigten, vollständig eingesteckten Position der Befestigungsabschnitte 5 und 6 in die Aufnahmen 11 und 12 geht die Überlappung der Steckverbindung nicht nur über die freien Abschnitte 10 der Befestigungsabschnitte 5 und 6, sondern auch über die Scharniere 7 und 8 und den unteren Teil der tragrahmenseitigen Abschnitte 9. Dadurch können die beiden Abschnitte 9 und 10 nicht mehr zueinander verschwenkt werden. Der tragrahmenseitige Abschnitt 9 kann nicht nach vorne umgeklappt werden. Jede Krafteinwirkung auf die Rückenlehne 1 wird durch den Tragrahmen und den tragrahmenseitigen Abschnitt 9 direkt in die fest mit der Fahrzeugkarosserie verbundenen Aufnahmen 11 und 12 eingeleitet. Der Kraftfluss geht nicht durch die Scharniere 7 und 8.

Nach dem Einbau der Rückenlehne 1 kann der Bedienhebel 14 in die andere Endlage geschwenkt werden, um die Rückenlehne 1 in der Gebrauchsstellung zu verriegeln. Durch das Verschwenken des Bedienhebels 14 werden die Enden der beiden Stangen 15 und 16 jeweils nach außen in die formschlüssigen Aufnahmen 11 und 12 hinein verlagert. Die beiden Befestigungsabschnitte 5 und 6 weisen an den dem Querträger 13 zugewandten Seiten jeweils eine Bohrung 17 und 18 auf, in die die beiden Stangen 15 und 16 mit einer Spielpassung durch das Schwenken des Bedienhebels 14 hineinverlagert werden. Dadurch kann die Rückenlehne 1 mit den beiden Befestigungsabschnitten 5 und 6 nicht mehr in den Aufnahmen 11 und 12 unbeabsichtigt verlagert werden. Die beiden Bohrungen 17 und 18 können wie gezeigt auch seitlich in den Stiften der Scharniere 7 und 8 angebracht sein. Nur in dieser verriegelten Stellung ist der Bedienhebel 14 nicht im Weg, wenn jemand auf dem Fahrzeugsitz Platz nehmen möchte. Dadurch wird sichergestellt, dass die Rückenlehne 1 immer verriegelt ist, wenn ein Passagier den Fahrzeugsitz nutzen möchte, da der Bedienhebel 14 ansonsten im Wege ist.

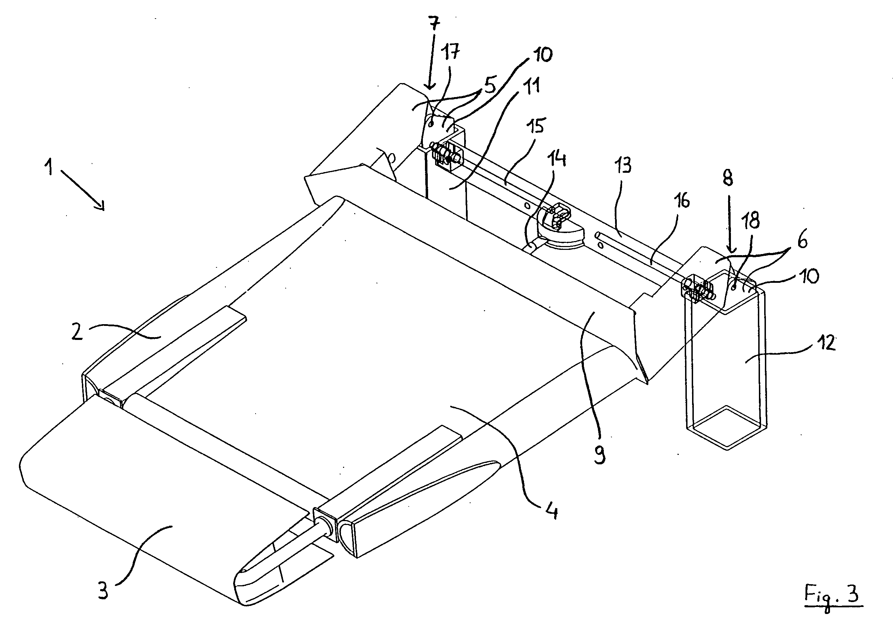

Wenn die Rückenlehne 1 nach vorne umgeklappt werden soll, muss die Rückenlehne 1 mit den beiden Befestigungsabschnitten 5 und 6 soweit aus den beiden Aufnahmen 11 und 12 nach oben herausgezogen werden, dass die beiden Scharniere 7 und 8 nicht mehr darin geführt sind. **Fig.** 3 zeigt die Rückenlehne 1 in einer nach vorne um die Scharniere 7 und 8 umgeklappten Position. Zum Überführen der Rückenlehne 1 von der in **Fig.** 2 gezeigten Gebrauchslage in die in **Fig.** 3 dargestellte Nichtgebrauchslage muss der Bedienhebel 14 nur in eine Mittelstellung zwischen den beiden Endlagen geschwenkt werden. In dieser Stellung sind die beiden Stangen 15 und 16 mit ihren Enden nicht mehr in den Bohrungen 17 und 18 im Eingriff, sie ragen aber noch etwas in die Aufnahmen 11 und 12 hinein. Die Hohlprofile 5 und 6 weisen an den dem Querträger 13 zugewandten Seiten am unteren Rand jeweils einen nach innen ragenden Steg 19 und 20 auf, der auf diesen Seiten den seitlichen Formschluss zu den Aufnahmen 11 und 12 bildet. Diese Stege 19 und 20 passen nicht an den in die Aufnahmen 11 und 12 hereinragenden Enden der Stangen 15 und 16 vorbei, wenn der Bedienhebel 14 sich in der Mittelstellung befindet. Dadurch wird verhindert, dass die umgeklappte Rückenlehne 1 aus den Aufnahmen 11 und 12 versehentlich gelöst werden kann.

## Patentansprüche

1. Fahrzeugsitz mit einer Rückenlehne, die einen Tragrahmen mit zwei frei abragenden Befestigungsabschnitten aufweist, und die aus einer Gebrauchsstellung in eine Nichtgebrauchsstellung um mindestens ein Scharnier nach vorne umgeklappt werden kann, **dadurch gekennzeichnet, dass** je ein Scharnier **(7, 8)** die Befestigungsabschnitte **(5, 6)** jeweils in einen freien **(10)** und einen tragrahmenseitigen Abschnitt **(9)** unterteilt, und die Befestigungsabschnitte **(5,6)** in karosseriefeste formschlüssige Aufnahmen **(11, 12)** des Fahrzeugs einsteckbar sind, wobei in der Gebrauchsstellung die Befestigungsabschnitte **(5, 6)** zumindest mit den freien Abschnitten **(10)** inklusive den Scharnieren **(7, 8)** eingesteckt sind, während in der Nichtgebrauchsstellung die Befestigungsabschnitte **(5, 6)** nur mit ihren freien Abschnitten **(10)** eingesteckt sind.

2. Fahrzeugsitz nach Anspruch 1, **dadurch gekennzeichnet, dass** die Befestigungsabschnitte **(5, 6)** vollständig aus den Aufnahmen **(11, 12)** herausnehmbar sind.

3. Fahrzeugsitz nach einem der vorhergehenden Ansprüche, **dadurch gekennzeichnet, dass** eine Verriegelungseinrichtung **(13, 14, 15, 16, 17, 18)** an den Aufnahmen **(11, 12)** angeordnet ist, die die in die Aufnahmen **(11, 12)** eingesteckten Befestigungsabschnitte **(5, 6)** arretieren kann.

4. Fahrzeugsitz nach Anspruch 3, **dadurch gekennzeichnet, dass** die Verriegelungseinrichtung **(13, 14, 15, 16, 17, 18)** die Befestigungsabschnitte **(5, 6)** in mindestens zwei unterschiedlichen Einstecktiefen in den Aufnahmen **(11, 12)** arretieren kann.

5. Fahrzeugsitz nach Anspruch 3 oder 4, **dadurch gekennzeichnet, dass** die Verriegelungseinrichtung **(13, 14, 15, 16, 17, 18)** durch einen Bedienhebel **(14)** betätigbar ist.

6. Fahrzeugsitz nach Anspruch 5, **dadurch gekennzeichnet, dass** der Bedienhebel **(14)** in einer geöffneten Stellung, in der die Befestigungsabschnitte **(5, 6)** durch die Verriegelungseinrichtung **(13, 14, 15, 16, 17, 18)** in ihrer Einstecktiefe nicht arretiert sind oder aufgrund der Einstecktiefe die Rückenlehne (1) nach vorne umklappbar ist, in den Sitzbereich des Fahrzeugsitzes hineinragt.

7. Fahrzeugsitz nach einem der vorhergehenden Ansprüche, **dadurch gekennzeichnet, dass** am Tragrahmen **(2)** ein Schließblech **(4)** befestigt ist, das Schutz vor einem Aufprall von Ladegut von hinten auf die Rückenlehne **(1)** bietet.
